# EUROPEAN PATENT SPECIFICATION

(11) **EP 1 709 721 B1**
(45) Date of publication and mention of the grant of the patent: **30.12.2015**
(21) Application number: 05726619.9
(22) Date of filing: 23.02.2005
(51) Int. Cl.: H02K 1/14, H02K 1/18, H02K 3/32, H02K 3/52, H02K 15/02, D06F 37/30

(54) **STRUCTURE OF HELICAL CORE AND METHOD FOR MANUFACTURING THE SAME**
STRUKTUR FÜR SCHRAUBENFÖRMIGEN KERN UND HERSTELLUNGSVERFAHREN DAFÜR
STRUCTURE D'UN NOYAU HELICOIDAL ET PROCEDE DE FABRICATION DE CE DERNIER

(30) Priority: 03.03.2004 KR 2004014311
(43) Date of publication of application: 11.10.2006
(73) Proprietor: LG Electronics Inc., Youngdungpo-gu Seoul 150-721 (KR)
(72) Inventor: AHN, Byung Hwan, Gimhae-si, Changwon-si,Gyeongsangnam-do 621-830 (KR)
(74) Representative: Vossius & Partner Patentanwälte Rechtsanwälte mbB
(86) International application number: PCT/KR2005/000497
(87) International publication number: WO 2005/084142

(56) References cited:
- WO-A1-99/23739
- JP-A- 2003 284 270
- KR-A- 2002 077 705
- KR-A- 2004 014 740
- US-A1- 2001 013 168
- US-B1- 6 313 558

## Description

### Technical Field

The present invention relates to drum type washing machines, and more particularly, to a helical core of a stator of an outer rotor type BLDC motor.

### Background Art

In general, the drum type washing machine, washing laundry by using a friction force between a drum rotated by a driving power of a motor and laundry in a state detergent, washing water, and the laundry are introduced into the drum, shows almost no damage to, and entangling of the laundry, and has pounding, and rubbing washing effects.

In the related art drum type washing machines, there are an indirect coupling type in which the driving power is transmitted from the motor to the drum through a belt wound on a motor pulley and a drum pulley indirectly, and a direct coupling type in which a rotor of a BLDC motor is coupled to the drum directly, to transmit the driving power from the motor to the drum, directly.

The type in which the driving power of the motor is transmitted to the drum, not directly, but indirectly through the motor pulley and the drum pulley, has much energy loss in the course of power transmission, and causes much noise in the course of power transmission.

According to this, for solving the problems of the indirect coupling, drum type washing machines, it is the present trend that use of the direct coupling, drum type washing machines with the BLDC motor is increasing.

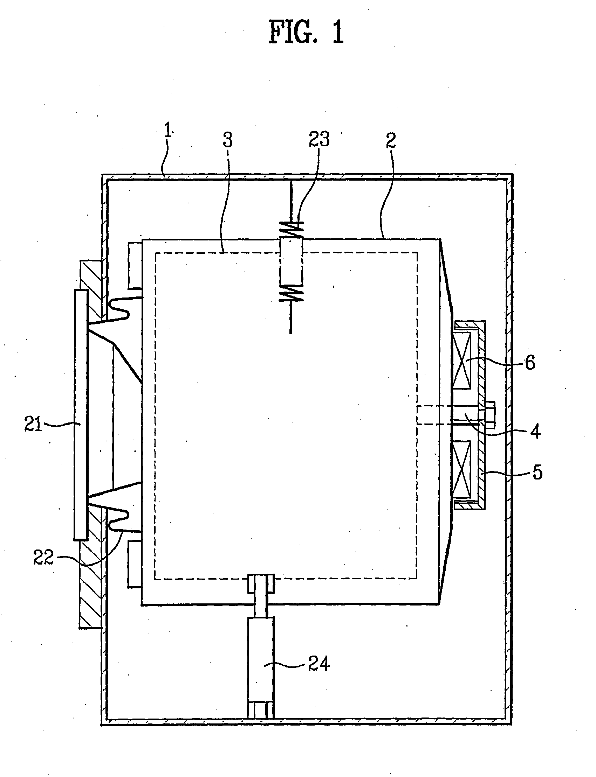

FIG. 1 illustrates a longitudinal section of a related art drum type washing machine.

Referring to FIG 1, the related art drum type washing machine is provided with a tub 2 mounted on an inside of a cabinet 1, and a drum 3 rotatably mounted on a central portion of an inside of the tub 2. There is a motor in rear of the tub 2, wherein a stator 6 is secured to a rear wall of the tub, and a rotor 5 surrounds the stator 6, and is connected to the drum 3 with a shaft passed through the tub.

In the meantime, there are a door 21 mounted on a front of the cabinet 1, and a gasket 22 between the door 21 and the tub 2.

There are hanging springs 23 between an inside surface of an upper portion of the cabinet 1, and an upper portion of an outside circumferential surface of the tub 2, and a friction damper 24 between the inside surface of a lower portion of the cabinet 1, and a lower portion of the outside circumferential surface of the tub 2.

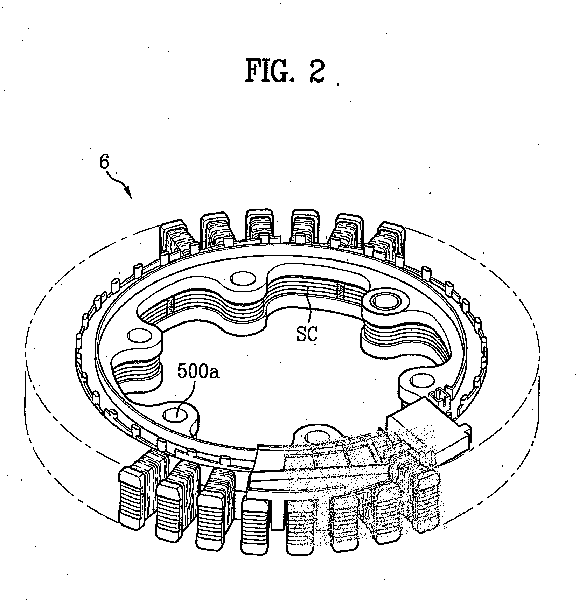

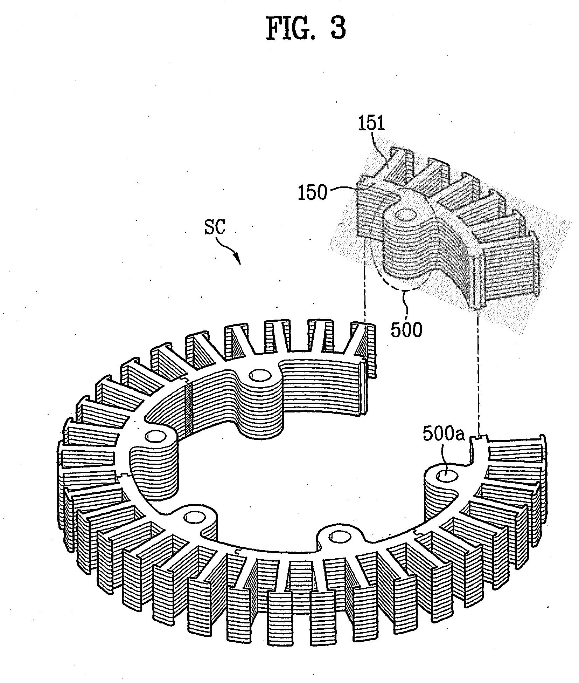

In the meantime, FIG. 2 illustrates a perspective exterior view of the stator in FIG. 1, and FIG. 3 illustrates a sectional core SC applicable to the stator in FIG. 2, wherein a related art stator core is fabricated by pressing a steel plate to form units cores each having teeth 151, a base portion 150, and a projection 500 on an opposite side of the teeth 151 for forming a fastening hole 500a, stacking the unit cores to form a core assembly, and joining the core assemblies in a circumferential direction with one another.

The projection 500 serves to provide the fastening hole 500a required for fastening the stator 6 to a rear wall of the tub 2, and to sustain a bolt fastening force.

However, the sectional core has, not only much loss of material, but also a complicated fabrication process.

That is, in a case of fabrication of the sectional core, since one unit core is pressed from one sheet of steel plate, the unit cores are stacked to construct a core assembly, and the core assemblies are joined with one another in a circumferential direction, to fabricate the sectional core, not only waste of material is excessive due to large quantity of steel plate left after the pressing of the core, but also the projection 500 on an opposite side of the teeth 151 require much steel plate and a complicate fabrication process.

Therefore, a stator core is required, which still serves the same function with the sectional core SC, but enables to reduce waste of material, and simplifies the fabrication process.

US-A-2001/0013168 relates to a stator core that is composed of a plurality of strips made of sheet steel formed with tooth portions and core back portions, wherein the plurality of strips are stacked such that the tooth portions line up together and the core back portions line up together, and wound spirally.

WO 99/23739 describes a rotor stack for electric motors, in which laminations of two types are alternately arranged.

### Disclosure of Invention

The object of the present invention is to provide a structure of a helical core and a method for fabricating the same, which can reduce weight of material, and has a simple fabrication process.

The object of the present invention can be achieved by the invention defined in claim 1. Further preferred features are set forth in dependent claims.

In another aspect of the present invention, a method for fabricating a helical core includes a stamping step for punching two rows of steel plate cores from an electric sheet in a state one pair of belt shaped bases are opposite to each other in a width direction thereof, and teeth respectively projected from the bases are alternate, and a winding step for forming a multi-layered structure by stacking the steel plate core from the stamping step while rotating the steel plate core in a helix starting from a bottom layer to an upper layer.

Thus, the drum type washing machine of the present invention permits both prevention of unwinding in an opposite direction of rotation and prevention of coming off between layers of the steel plate core easy in winding the helical core, to enable winding of the helical core easy.

Moreover, the drum type washing machine of the present invention permits to save material required for fabrication of the helical core, simplify the fabrication process, and reduce noise caused by cogging torque of the helical core.

### Brief Description of Drawings

FIG. 1 illustrates a longitudinal section of a related art direct coupling, drum type washing machine, schematically;
FIG. 2 illustrates a perspective view of a related art stator;
FIG. 3 illustrates a perspective view of a sectional core of FIG. 2;
FIG. 4 illustrates a diagram showing the steps of a process for fabricating a helical core in accordance with a preferred embodiment of the present invention, schematically;
FIG. 5 illustrates a longitudinal section of key parts along a line I-I in FIG. 4;
FIG. 6 illustrates a plan view of a key portion of a steel plate core of the helical core in FIG. 4;
FIG. 7 illustrates a perspective view of an exterior of a stator core having the helical core of the present invention applied thereto;
FIG 8 illustrates an exploded perspective view of FIG. 7;
FIG. 9 illustrates a back side perspective view showing a portion of an upper insulator in FIG. 8; and
FIG 10 illustrates a plan view of key portion of the stator in FIG 7.

### Best Mode for Carrying Out the Invention

Embodiments of the present invention will be described in detail with reference to the attached drawings 4 to 10.

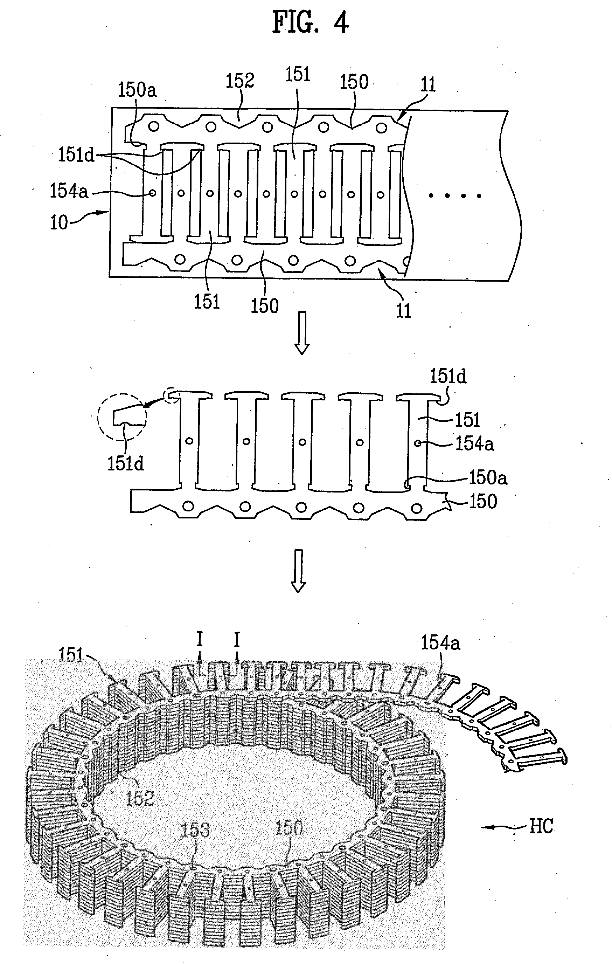

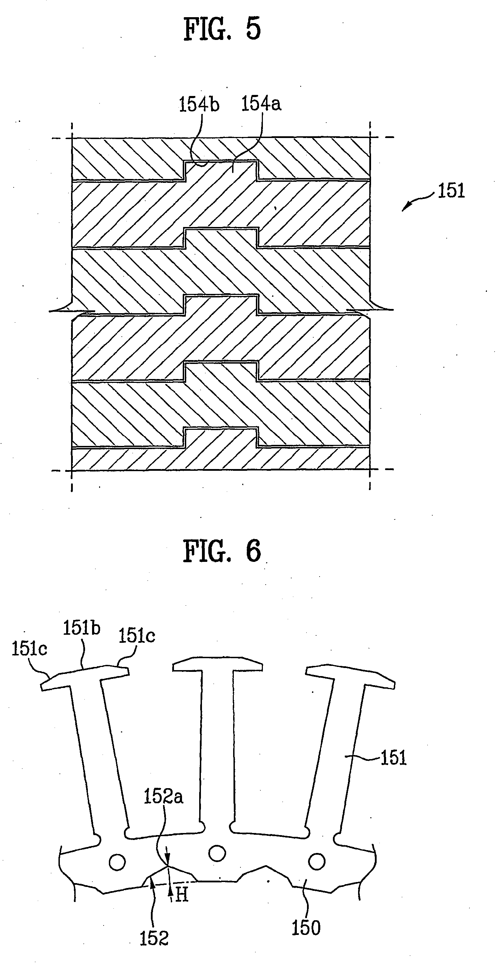

FIG 4 illustrates a diagram showing the steps of a process for fabricating a helical core in accordance with a preferred embodiment of the present invention schematically, FIG 5 illustrates a longitudinal section of key parts along a line I-I in FIG. 4, and FIG. 6 illustrates a plan view of a key portion of a steel plate core of the helical core in FIG. 4.

As shown, the helical core HC of the present invention includes an annular multi-layered structure of steel plate core 11 stacked while rotating the steel plate core 11 in a helix starting from a bottom layer to a top layer, each of which steel plate cores 11 is formed by punching from an electric sheet 10 in a state one pair of bases 150 of belt shapes are opposite to each other in a width direction thereof, and teeth 151 respectively projected from the bases 150 are alternate.

That is, the steel plate cores 11 are arranged in two rows in the one electric sheet.

In this instance, in order to prevent the steel plate core 11 from unwinding in a direction opposite to a rotation direction of the helix, and coming off from underlying/overlying layer of the steel plate core 11 at the time of stacking of the steel plate cores 11 while rotating the steel plate core 11 in a helix, a dowel pin 154a is formed on an upper surface of each of the teeth 151 of the steel plate core 11, and a hole 154b is formed in a lower surface of each of the teeth 151 in complementary to the dowel pin 154a.

The dowel pin may be formed on the lower surface of each of the teeth 151, and the hole may be formed on the upper surface of each of the teeth 151 in complementary to the dowel pin.

The base 150 has a notch 152 between each of adjacent teeth 151 of the steel plate core 11, so that a stress is reduced when the steel plate core 11 is wound, to make the winding easy.

The notch 152 has a shape of a polygon, with a depth which is the deepest at a middle portion 152a, and becomes the smaller as the notch goes toward opposite sides the farther from the middle portion 152a until the notch 152 merges with an edge of the base 150, such that opposite sides of the notch 152 is symmetry with reference to the middle portion 152a.

An end of each of the teeth 151 of the steel plate core 11 has corner portions 151c of opposite edges thereof with reference to a middle portion 151b of the end each chamfered in a straight or curved line, to form a "C" shape substantially, for reducing noise coming from a cogging torque during the motor is driven.

In the meantime, steel plate cores 11 are punched from the electric sheet 10 in two rows, such that notches 150a in complementary to the ends of the teeth 151 of the steel plate core 11 are formed in the base 150 opposite to the teeth 151, i.e., in opposite bases 150.

Moreover, it is preferable that the teeth 151 of the steel plate core 11 has concaves for ejector 151d for smooth separation of the steel plate cores 11 punched in two rows.

The stacked steel plate cores 11 are riveted through a pass through hole in the base 150 with a rivet 153, to fasten the stacked steel plate cores 11.

The stacked steel plate core 11 has a winding starting portion and a winding end portion welded to portions of the base 150 in contact therewith respectively.

For reference, a structure of the stator core having the foregoing helical core HC applied thereto will be described with reference to the attached drawings 7 to 10.

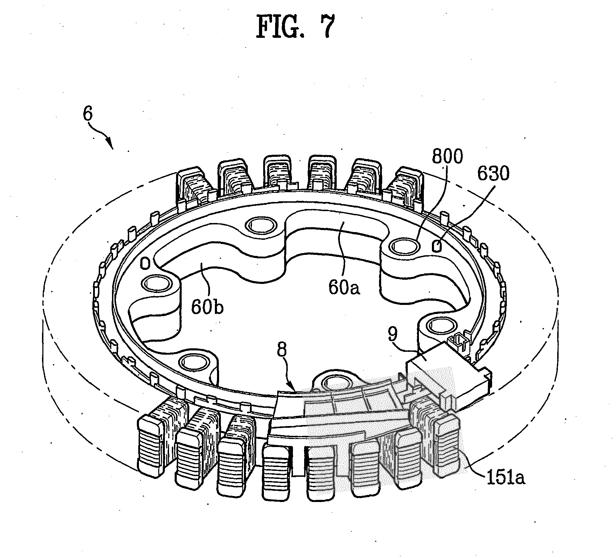

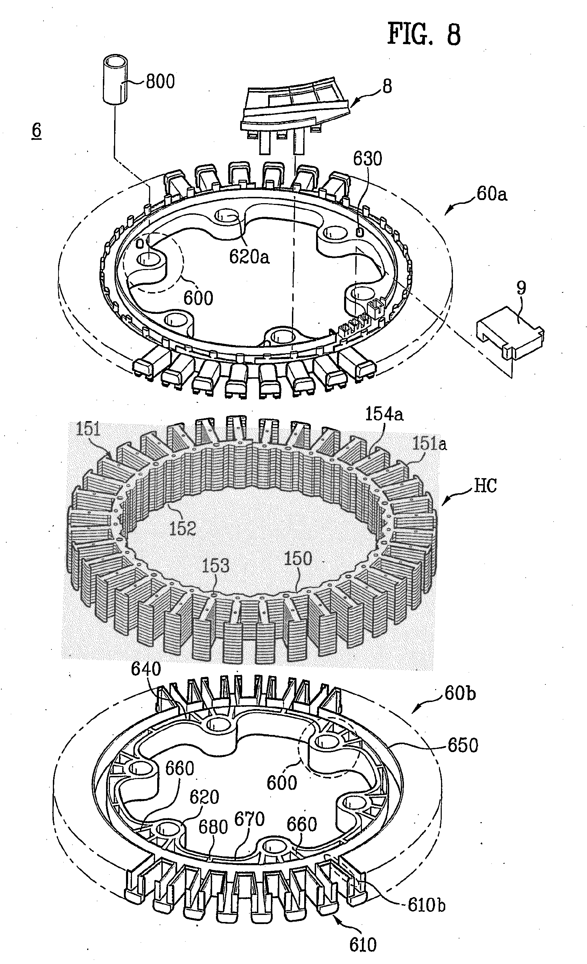

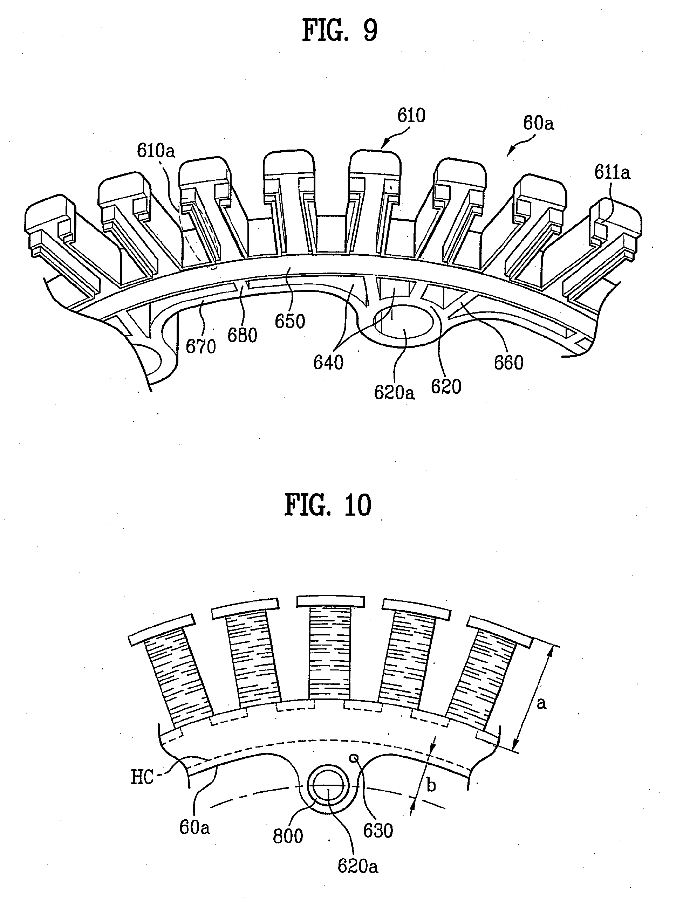

FIG. 7 illustrates a perspective view of an exterior of a stator core having the helical core of the present invention applied thereto, FIG 8 illustrates an exploded perspective view of FIG. 7, FIG. 9 illustrates a back side perspective view showing a portion of an upper insulator in FIG. 8, and FIG. 10 illustrates a plan view of key portion of the stator in FIG. 7. ,

As shown, the stator 6 having the helical core HC of the present invention applied thereto includes the foregoing helical core HC, an upper insulator 60a of an electric insulating material covered on an upper side of the helical core HC in a shape in complementary to a shape of the helical core HC, and a lower insulator 60b of an electric insulating material in a shape in complementary to a shape of the helical core HC to cover the lower side of the helical core HC at the time of assembly with the upper insulator 60a, wherein each of the upper insulator 60a and the lower insulator 60b includes three or more than three fastening portions 600 formed as one body therewith projected from an inner side of the helical core HC toward a center of the stator 6 for fastening the stator 6 to a fixing side of the tub.

The fastening portion 600 has a fastening hole 620a for securing the stator 6 to the fixing side with a fastening member. The fastening hole 620a is constructed of a boss 620 projected to a back side of the fastening portion 600.

Each of the upper insulator 60a and the lower insulator 60b has a supporting rib 650 on an inside along a circumferential direction thereof in contact with the helical core HC for supporting an inside surface of the core.

The fastening portion 600 of each of the upper insulator 60a and the lower insulator 60b has at least one reinforcing rib 660 connected between the boss 620 of the fastening hole 520a and the supporting rib 650 for spreading fastening force concentrated on the boss 620 and reinforcing a strength of the fastening portion 600.

In the meantime, the fastening portion 600 of each of the upper insulator 60a and the lower insulator 60b has a reinforcing rib 670 at an inside circumference thereof, and at least one connection rib 680 connected between the reinforcing rib 670 and the supporting rib 650 which supports an inside surface of the core in a radial direction, for providing a supporting force.

In the meantime, each of the upper insulator 60a and the lower insulator 60b has tips 610a and 610b on opposite sidewalls of each of the teeth 610 thereof having shapes in complementary to each other for fitting in at the time of assembly to form a flush surface.

Each of the tips 610a and 610b on each of the teeth 610 has a "└" shape if the other side has a "¬" shape.

At the opposite end surfaces substantially perpendicular to the opposite sidewall surfaces of the T 610 of the upper insulator 60a and the lower insulator 60b, there are also the tips 610a and 610b having shape in complementary to each other.

The T 610 of each of the upper insulator 60a and the lower insulator 60b has a seating surface 611 a at an end for seating a core shoe 151a of the helical core HC.

Along with this, in the vicinity of the fastening hole 620a of the fastening portion 600 of the upper insulator 60a, there is a positioning projection 630 having a shape in complementary to a positioning hole or a slot (not shown) in the fixing side of the tub.

There is a cylindrical sleeve 800 in the fastening hole 620a, a spring pin having an elasticity owing to an incised portion, or a hollow pin enabling press fit in the fastening hole 620a, serves as a bushing.

In the meantime, referring to FIG. 10, with regard to the stator 6 of the present invention having the fastening portions 600 each formed as one body with the upper insulator 60a, or the lower insulator 60b projected from three of more than three places of an inside circumferential surface of the core in a radial direction, the fastening portion 600 is formed such that an inequality of a≥b can be defined, where "a" denotes a length of each of the teeth 151 projected from an outside surface of the helical core HC, and "b" denotes a distance from an inside surface of the helical core to a center of a fastening hole in the fastening portion 600.

For reference, an unexplained symbol 8 in FIG. 8 denotes a hall sensor assembly for controlling a motor, and 9 denotes a tap housing assembly for connection to a power source for supplying power to the stator.

A method for fabricating a helical core in accordance with a preferred embodiment of the present invention will be described with reference to FIG. 4.

As shown, the method for fabricating a helical core in accordance with a preferred embodiment of the present invention includes a stamping step for punching two rows of steel plate cores 11 from an electric sheet 10 in a state one pair of bases 150 of belt shapes are opposite to each other in a width direction thereof, and teeth 151 respectively projected from the bastes 150 are alternate, and a winding step for forming a multi-layered structure by stacking the steel plate core 11 from the stamping step while rotating in a helix starting from a bottom layer to an upper layer.

In the stamping step, the steel plate core 11 is formed by punching the electric sheet 10 in two rows such that notches 151d in complementary to a shape of an end of each of teeth 151 are formed in the base 150 on an opposite side of each of the teeth 151.

In this instance, by providing concaves for ejector 151d at the teeth 151 of the steel plate core 11, the steel plate cores 11 punched in two rows from the electric sheet 10 can be separated, easily.

Since the steel plate core 11 is punched as long as a length of the electric sheet 10 by a press (not shown), the steel plate core 11 is cut at a length required for fabrication of one helical core HC after the stamping step.

In the meantime, the steel plate core 11 cut at the required length thus becomes to have a ring shape as the steel plate core 11 is stacked while the steel plate core 11 is rotated to be wound in a helix automatically by a winding device (not shown) such that the helix has a predetermined diameter and the teeth 151 are projected, outwardly.

The wound, and stacked steel plate cores 11 are held together with a rivet 153 passed through a pass through hole in the base portion 150.

Moreover, as the steel plate core 11 riveted thus has a winding starting portion (not shown) and a winding end portion welded to portions of the base 150 in contact therewith respectively, to complete fabrication of one helical core HC.

For reference, if the completed helical core HC is assembled with the upper, and lower insulators 60a, and 60b (see FIG. 5), and a coil 142 is wound on each of the teeth 151 of the helical core HC assembled with the upper, and lower insulators 60a, and 60b, a stator 6 (see FIG. 6) is completed.

It will be apparent to those skilled in the art that various modifications and variations can be made in the present invention without departing from the scope of the claims. Thus, it is intended that the present invention covers the modifications and variations of this invention provided they come within the scope of the appended claims.

### Industrial Applicability

The drum type washing machine of the present invention permits both prevention of unwinding in an apposite direction of rotation and prevention of coming off between layers of the steel plate core easy in winding the helical core, to enable wingding of the helical core easy.

The drum type washing machine of the present invention permits to save material required for fabrication of the helical core, simplify the fabrication process, and reduce noise caused by cogging torque of the helical core, thereby having significantly high industrial applicability.

## Claims

1. A helical core of an annular multi-layered structure of steel plate core (11) stacked while rotating the steel plate core (11) in a helix starting from a bottom layer to a top layer, the steel plate core (11) being formed by punching from an electric sheet in a state one pair of belt shaped bases (150) are opposite to each other in a width direction thereof, and teeth (151) respectively projected from the bases (150) are alternate, the helical core comprising:
a dowel pin (154a) on an upper or lower surface of each of the teeth (151) of the steel plate core (11), and a hole (154b) in complementary to the dowel pin (154a), for preventing the steel plate core (11) from unwinding in a direction opposite to a rotation direction of the helix, and coming off from underlying/overlying layer of the steel plate core (11) at the time of stacking of the steel plate core (11) while rotating the steel plate core (11) in a helix;
a notch (152) in the base (150) between each of adjacent teeth (151) of the steel plate core (11), for reducing a stress when the steel plate core (11) is wound; and
a substantially "C" shaped end of each of the teeth (151) by chamfering corner portions of opposite edges (151c) of an end of each of the teeth (151) in a straight or curved line, for reducing noise coming from a cogging torque during the motor is driven,
wherein the steel plate cores (11) are punched from the electric sheet in two rows, such that notches (152) in complementary to the ends of the teeth of the steel plate core (11) are formed in the base (150) opposite to the teeth (151),
**characterized in that** the teeth (151) of the steel plate core (11) each includes concavities (151d) to make easy separation of the steel plate cores (11) punched in two rows.

2. The helical core as claimed in claim 1, wherein the stacked steel plate core (11) includes a rivet (153) passed through a pass through hole in the base (150) for holding the stacked steel plate core, together.

3. The helical core as claimed in claim 1 or 2, wherein the stacked steel plate core (11) includes welded portions at predetermined portions of the base (150) in contact with a winding starting portion and a winding end portion of the steel plate core.

4. The helical core as claimed in any of claims 1 to 3, wherein the notch (152) has a shape of a polygon between adjacent teeth (151), with a depth which is the deepest at a middle portion (152a), and becomes the smaller as the notch goes toward opposite sides the farther from the middle portion, where the notch (152) merges with an edge of the base.

5. A method for fabricating the helical core of any of preceding claims, comprising:
a stamping step for punching two rows of steel plate cores (11) from an electric sheet in a state one pair of belt shaped bases (150) are opposite to each other in a width direction thereof, and teeth (151) respectively projected from the bases (150) are alternate; and
a winding step for forming a multi-layered structure by stacking the steel plate core (11) from the stamping step while rotating the steel plate core (11) in a helix starting from a bottom layer to an upper layer.

6. The method as claimed in claim 5, wherein the stamping step includes the step of punching the electric sheet in two rows to form the steel plate cores (11), such that notches (152) in complementary to a shape of an end of each of teeth (151) are formed in the base (150) on an opposite side of each of the teeth.

7. The method as claimed in claim 6, wherein the stamping step further includes a step of forming concavities (151d) in the teeth (151) of the steel plate core (11), to make easy separation of the steel plate cores punched in two rows.

8. The method as claimed in claim 5, further comprising the step of cutting the steel plate core (11) at a fixed length after the steel plate core is punched from the electric sheet after the step of stamping.

9. The method as claimed in claim 5, further comprising the step of holding the stacked steel plate core (11) together by means of a rivet (153) passed through a pass through hole in the base (150) after the winding step.

10. The method as claimed in claim 5, further comprising the step of welding a winding starting portion and a winding end portion of the steel plate core (11) to predetermined portions of the base (150) in contact therewith respectively after the winding step.

11. The helical core as claimed in any of claims 1 to 3, wherein the notch (152) formed in the base (150) between each of adjacent teeth (151) of the steel plate core (11) such that the notch (152) has a shape of a polygon, with a depth which is the deepest at a middle portion (152a), and becomes the smaller as the notch goes from the middle portion toward opposite sides the farther, where the notch (152) merges with an edge of the base.

12. The helical core as claimed in claim 11, wherein the steel plate cores (11) are punched from the electric sheet in two rows, such that notches (152) in complementary to the ends of one side teeth (151) of the steel plate core (11) are formed in the base (150) opposite to the one side teeth (151).

13. The helical core as claimed in claim 11, wherein the stacked steel plate core (11) includes welded portions at predetermined portions of the base (150) in contact with a winding starting portion and a winding end portion of the steel plate core.

14. The helical core as claimed in any of claims 1 to 4 and 11 to 13, wherein the teeth (151) project from the base (150) in direction substantially perpendicular to the base.

15. The helical core as claimed in claim 14, wherein the end of each of the teeth (151) includes corner portions of opposite edges (151c) thereof each chamfered in a straight or curved line.

## Patentansprüche

1. Schraubenförmiger Kern für eine ringförmige Vielschichtstruktur eines Stahlplattenkerns (11), der beginnend von einer untersten Schicht zu einer obersten Schicht geschichtet wird, während der Stahlplattenkern (11) in einer Schraublinie gedreht wird, wobei der Stahlplattenkern (11) durch Stanzen aus einem Elektroblech in einem Zustand gebildet wird, in dem ein Paar von gurtförmigen Sockeln (150) in seiner Breitenrichtung entgegengesetzt zueinander liegt und jeweils von den Sockeln (150) vorstehende Zähne (151) sich abwechseln, wobei der schraubenförmige Kern aufweist:
einen Führungsstift (154a) auf einer oberen oder unteren Oberfläche jedes der Zähne (151) des Stahlplattenkerns (11) und ein zu dem Führungsstift (154a) komplementäres Loch (154b), um zu verhindern, dass der Stahlplattenkern (11) sich in eine zu einer Drehrichtung der Schraublinie entgegengesetzte Richtung abwickelt und zur Zeit des Schichtens des Stahlplattenkerns (11) während des Drehens des Stahlplattenkerns (11) in einer Schraublinie von der darunterliegenden/darüberliegenden Schicht des Stahlplattenkerns (11) abgeht;
eine Kerbe (152) in dem Sockel (150) jeweils zwischen benachbarten Zähnen (151) des Stahlplattenkerns (11) zur Verringerung einer Spannung, wenn der Stahlplattenkern (11) gewickelt wird; und
ein im Wesentlichen "C"-förmiges Ende jedes der Zähne (151) durch Anschrägen von Eckabschnitten von entgegengesetzten Rändern (151c) eines Endes jedes der Zähne (151) in einer geraden oder gekrümmten Linie, um Geräusche zu verringern, die von einem Rastmoment kommen, während der Motor angetrieben wird,
wobei die Stahlplattenkerne (11) in zwei Reihen aus dem Elektroblech gestanzt werden, so dass komplementär zu den Enden der Zähne des Stahlplattenkerns (11) gegenüber den Zähnen (151) Kerben (152) in dem Sockel (150) ausgebildet werden,
**dadurch gekennzeichnet, dass** die Zähne (151) des Stahlplattenkerns (11) jeweils Höhlungen (151d) umfassen, um die Trennung der in zwei Reihen gestanzten Stahlplattenkerne (11) leicht zu machen.

2. Schraubenförmiger Kern nach Anspruch 1, wobei der geschichtete Stahlplattenkern (11) eine Niete (153) umfasst, die durch ein Durchgangsloch in dem Sockel (150) geht, um den geschichteten Stahlplattenkern zusammen zu halten.

3. Schraubenförmiger Kern nach Anspruch 1 oder 2, wobei der geschichtete Stahlplattenkern (11) geschweißte Abschnitte an vorgegebenen Abschnitten des Sockels (150) in Kontakt mit einem Wicklungsanfangsabschnitt und einem Wicklungsendabschnitt des Stahlplattenkerns umfasst.

4. Schraubenförmiger Kern nach einem der Ansprüche 1 bis 3, wobei die Kerbe (152) eine Form eines Polygons zwischen benachbarten Zähnen (151) mit einer Tiefe hat, die in einem mittleren Abschnitt (152a) am tiefsten ist und geringer wird, wenn die Kerbe in Richtung entgegengesetzter Seiten weiter weg von dem Mittelabschnitt geht, wobei die Kerbe (152) sich mit einem Rand des Sockels vereinigt.

5. Verfahren zur Herstellung eines schraubenförmiger Kerns nach jedem der vorhergehenden Ansprüche, das aufweist:
einen Ausstanzschritt zum Stanzen von zwei Reihen von Stahllattenkernen (11) aus einem Elektroblech in einem Zustand, in dem ein Paar von gurtförmigen Sockeln (150) in seiner Breitenrichtung entgegengesetzt zueinander sind und jeweils von den Sockeln (150) vorstehende Zähne (151) sich abwechseln, und
einen Wicklungsschritt zum Ausbilden einer Vielschichtstruktur durch Schichten des Stahlplattenkerns (11) von dem Ausstanzschritt beginnend von einer untersten Schicht zu einer oberen Schicht, während der Stahlplattenkern (11) in einer Schraublinie gedreht wird.

6. Verfahren nach Anspruch 5, wobei der Ausstanzschritt den Schritt des Stanzens des Elektroblechs in zwei Reihen umfasst, um die Stahlplattenkerne (11) derart auszubilden, dass komplementär zu einer Form eines Endes jedes der Zähne (151) auf einer entgegengesetzten Seite jedes der Zähne Kerben (152) in dem Sockel (150) ausgebildet werden.

7. Verfahren nach Anspruch 6, wobei der Ausstanzschritt ferner einen Schritt zum Formen von Höhlungen (151d) in den Zähnen (151) des Stahlplattenkerns (11) umfasst, um die Trennung der in zwei Reihen gestanzten Stahlplattenkerne leicht zu machen.

8. Verfahren nach Anspruch 5, das ferner nach dem Schritt des Ausstanzens den Schritt des Schneidens des Stahlplattenkerns (11) bei einer festen Länge aufweist, nachdem der Stahlplattenkern aus dem Elektroblech gestanzt wurde.

9. Verfahren nach Anspruch 5, das ferner nach,dem Wicklungsschritt den Schritt des Zusammenhaltens des geschichteten Stahlplattenkerns (11) mit Hilfe einer Niete (153) aufweist, die durch ein Durchgangsloch in dem Sockel (150) geführt wird.

10. Verfahren nach Anspruch 5, das den Schritt des Schweißens eines Wicklungsanfangsabschnitts und eines Wicklungsendabschnitts des Stahlplattenkerns (11) an vorgegebene Abschnitte des Sockels (150), die jeweils nach dem Wicklungsschritt in Kontakt damit sind, aufweist.

11. Schraubenförmiger Kern nach einem der Ansprüche 1 bis 3, wobei die Kerbe (152) in dem Sockel (150) zwischen jedem benachbarten Zahn (151) des Stahlplattenkerns (11) derart ausgebildet ist, dass die Kerbe (152) eine Form eines Polygons mit einer Tiefe hat, die in einem mittleren Abschnitt (152a) am tiefsten ist und geringer wird, wenn die Kerbe von dem Mittelabschnitt weg in Richtung entgegengesetzter Seiten weiter weg geht, wobei die Kerbe (152) sich mit einem Rand des Sockels vereinigt.

12. Schraubenförmiger Kern nach Anspruch 11, wobei die Stahlplattenkerne (11) in zwei Reihen aus dem Elektroblech gestanzt werden, so dass komplementär zu den Enden von Zähnen (151) einer Seite des Stahlplattenkerns (11) Kerben (152) in dem Sockel (150) entgegengesetzt zu den Zähnen (151) einer Seite ausgebildet werden.

13. Schraubenförmiger Kern nach Anspruch 11, wobei der geschichtete Stahlplattenkern (11) geschweißte Abschnitte an vorgegebenen Abschnitten des Sockels (150) in Kontakt mit einem Wicklungsanfangsabschnitt und einem Wicklungsendabschnitt des Stahlplattenkerns aufweist.

14. Schraubenförmiger Kern nach einem der Ansprüche 1 bis 4 und 11 bis 13, wobei die Zähne (151) in eine Richtung im Wesentlichen senkrecht zu dem Sockel von dem Sockel (150) vorstehen.

15. Schraubenförmiger Kern nach Anspruch 14, wobei das Ende jedes der Zähne (151) Eckabschnitte ihrer entgegengesetzten Ränder (151c) umfasst, die jeweils in einer geraden oder gekrümmten Linie angeschrägt sind.

## Revendications

1. Noyau hélicoïdal d'une structure multicouche annulaire de noyau en tôle d'acier (11) empilée tout en faisant tourner le noyau en tôle d'acier (11) selon un mouvement hélicoïdal, à partir d'une couche inférieure jusqu'à une couche supérieure, le noyau en tôle d'acier (11) étant formé en poinçonnant une tôle électrique dans un état dans lequel une paire de bases en forme de courroie (150) sont opposées entre elles dans le sens de leur largeur, et des dents (151) faisant respectivement saillie des bases (150) sont alternées, le noyau hélicoïdal comprenant :
une goupille de positionnement (154a) sur une surface supérieure ou inférieure de chacune des dents (151) du noyau en tôle d'acier (11), et un trou (154b) complémentaire par rapport à la goupille de positionnement (154a), pour empêcher le noyau en tôle d'acier (11) de se dérouler dans une direction opposée à une direction de rotation de l'hélice, et de sortir de la couche sous-jacente/surjacente du noyau en tôle d'acier (11) au moment de l'empilement du noyau en tôle d'acier (11) tout en faisant tourner le noyau en tôle d'acier (11) selon un mouvement hélicoïdal ;
une encoche (152) dans la base (150) entre chacune des dents (151) adjacentes du noyau en tôle d'acier (11), pour réduire une tension lorsque le noyau en tôle d'acier (11) est enroulé ; et
une extrémité sensiblement en forme de « C » de chacune des dents (151) en chanfreinant des parties de coin des bords (151c) opposés d'une extrémité de chacune des dents (151) dans une ligne droite ou incurvée, pour réduire le bruit provenant d'un couple de denture pendant que le moteur est entraîné,
dans lequel les noyaux en tôle d'acier (11) sont poinçonnés dans une tôle électrique sur deux rangées, de sorte que les encoches (152) complémentaires par rapport aux extrémités des dents du noyau en tôle d'acier (11) sont formées dans la base (150) opposée aux dents (151),
**caractérisé en ce que** les dents (151) du noyau en tôle d'acier (11) comprennent chacune des concavités (151d) pour faciliter la séparation des noyaux en tôle d'acier (11) poinçonnés sur deux rangées.

2. Noyau hélicoïdal selon la revendication 1, dans lequel le noyau en tôle d'acier (11) empilé comprend un rivet (153) passant par un trou débouchant dans la base (150) pour maintenir les noyaux en tôle d'acier empilés ensemble.

3. Noyau hélicoïdal selon la revendication 1 ou 2, dans lequel le noyau en tôle d'acier (11) empilé comprend des parties soudées au niveau de parties prédéterminées de la base (150) en contact avec une position de début d'enroulement et une position de fin d'enroulement du noyau en tôle d'acier.

4. Noyau hélicoïdal selon l'une quelconque des revendications 1 à 3, dans lequel l'encoche (152) a une forme de polygone entre les dents (151) adjacentes, avec une profondeur qui est la plus profonde au niveau d'une partie centrale (152a), et se rétrécit au fur et à mesure que l'encoche se rapproche des côtés opposés les plus éloignés de la partie centrale, où l'encoche (152) fusionne avec un bord de la base.

5. Procédé pour fabriquer un noyau hélicoïdal selon l'une quelconque des revendications précédentes, comprenant :
une étape d'estampage consistant à poinçonner deux rangées de noyaux en tôle d'acier (11) dans une tôle électrique dans un état dans lequel chaque paire de bases en forme de courroie (150) sont opposées entre elles dans le sens de leur largeur, et les dents (151) respectivement en saillie des bases (150) sont alternées ; et
une étape d'enroulement consistant à former une structure multicouche en empilant le noyau en tôle d'acier (11) à partir de l'étape d'estampage tout en faisant tourner le noyau en tôle d'acier (11) selon un mouvement héicoïdal à partir d'une couche inférieure jusqu'à une couche supérieure.

6. Procédé selon la revendication 5, dans lequel l'étape d'estampage comprend l'étape consistant à poinçonner la tôle électrique sur deux rangées afin de former les noyaux en tôle d'acier (11), de sorte que les encoches (152) de forme complémentaire par rapport à une extrémité de chacune des dents (151) sont formées dans la base (150) sur un côté opposé de chacune des dents.

7. Procédé selon la revendication 6, dans lequel l'étape d'estampage comprend en outre une étape consistant à former des concavités (151d) dans les dents (151) du noyau en tôle d'acier (11), afin de faciliter la séparation des noyaux en tôle d'acier poinçonnés sur deux rangées.

8. Procédé selon la revendication 5, comprenant en outre l'étape consistant à couper le noyau en tôle d'acier (11) à une longueur fixe après que le noyau en tôle d'acier a été poinçonné dans la tôle électrique après l'étape d'estampage.

9. Procédé selon la revendication 5, comprenant en outre l'étape consistant à maintenir les noyaux en tôle d'acier (11) empilés ensemble au moyen d'un rivet (153) qui passe par un trou débouchant dans la base (150) après l'étape d'enroulement.

10. Procédé selon la revendication 5, comprenant en outre l'étape consistant à souder une partie de début d'enroulement et une partie de fin d'enroulement du noyau en tôle d'acier (11) dans des parties prédéterminées de la base (150) en contact entre elles respectivement après l'étape d'enroulement.

11. Noyau hélicoïdal selon l'une quelconque des revendications 1 à 3, dans lequel l'encoche (152) est formée dans la base (150) entre chacune des dents (151) adjacentes du noyau en tôle d'acier (11) de sorte que l'encoche (152) a une forme polygonale, avec une profondeur qui est la plus profonde au niveau d'une partie centrale (152a), et se rétrécit au fur et à mesure que l'encoche se rapproche de la partie centrale vers les côtés opposés les plus éloignés où l'encoche (152) fusionne avec un bord de la base.

12. Noyau hélicoïdal selon la revendication 11, dans lequel les noyaux en tôle d'acier (11) sont poinçonnés dans une tôle électrique sur deux rangées, de sorte que les encoches (152) complémentaires par rapport aux extrémités des dents latérales (151) du noyau en tôle d'acier (11) sont formées dans la base (150) opposée aux dents latérales (151).

13. Noyau hélicoïdal selon la revendication 11, dans lequel le noyau en tôle d'acier (11) empilé comprend des parties soudées au niveau de parties prédéterminées de la base (150) en contact avec une partie de début d'enroulement et une partie de fin d'enroulement du noyau en tôle d'acier.

14. Noyau hélicoïdal selon l'une quelconque des revendications 1 à 4 et 11 à 13, dans lequel les dents (151) font saillie de la base (150) dans une direction sensiblement perpendiculaire à la base.

15. Noyau hélicoïdal selon la revendication 14, dans lequel l'extrémité de chacune des dents (151) comprend des parties de coin de leurs bords (151c) opposés, chacun chanfreiné sur une ligne droite ou incurvée.
